# EUROPEAN PATENT SPECIFICATION

(11) **EP 2 726 973 B1**
(45) Date of publication and mention of the grant of the patent: **01.04.2020**
(21) Application number: 12772802.0
(22) Date of filing: 29.06.2012
(51) Int. Cl.: G06F 3/12

(54) **DYNAMIC USER INTERFACE**
DYNAMISCHE BENUTZERSCHNITTSTELLE
INTERFACE UTILISATEUR DYNAMIQUE

(30) Priority: 29.06.2011 US 201161502352 P
(43) Date of publication of application: 07.05.2014
(73) Proprietor: Markem-Imaje Holding, 26500 Bourg-Les-Valence (FR)
(72) Inventor: ARNÈR, Mattias, S-417 57 Goteborg (SE)
(74) Representative: Valea AB
(86) International application number: PCT/IB2012/001684
(87) International publication number: WO 2013/001370

(56) References cited:
- EP-A1- 0 780 236
- EP-A2- 1 443 391
- US-A1- 2010 060 909

## Description

### TECHNICAL FIELD

Example embodiments presented herein are directed towards a dynamic user interface capable of adaption for dynamically providing printing information for various types of printing technologies.

### BACKGROUND

In an industrial printing environment, numerous printers are typically configured to simultaneously print information on various types of items. One example of an industrial printing environment may be the printing of labels on various types of packages or consumer goods. Consumer goods require a great deal of product identification (e.g., expiry dates, traceability data, etc.). The information to be printed may vary from one item to another, from one batch of similar items to another, from one site or time of manufacture to another, and/or from one type of print technology to another.

Each printing technology typically has two basic components, a print-head and a corresponding controller. The controller can be situated locally, or close to the print-head. The controller may also be remotely situated. Remote controllers may be shared or used to control several print-heads. The controller may often comprise a user interface which may provide an operator with a current printing status and/or other printing-related information. In a print application management computer program that enables a user to generate a printed application using one or more document processing devices, patent application US 2010/060909 relates to a method comprising: identifying a plug-in that extends one or more capabilities of the print application management computer program; extending the print application management computer program to include the identified plug-in, including reconfiguring a graphical user interface of the print application management computer program to include one or more GUI widgets associated with the identified plug-in. This document does not disclose the computer connecting with print-heads of printers of various printing technologies and also does not disclose changing a user interface template of the printer.

### SUMMARY

The print, image, formatting specifications, and/or printing status and related information may differ with different forms of print technologies. Thus, the type of information which is provided through a user interface, and how this information is displayed, may differ as a result of the different forms of print technologies. Furthermore, based on the printing technology being utilized, a user interface may provide different functionality.

For example, a user interface associated with an ink-jet printer may provide information relating to a current ink supply, whereas a user interface associated with a thermal based print technology may provide information relating to a temperature of the printer head. Currently, printing-related user interfaces are typically static and are therefore designated for a specific type of print technology.

Thus, a need exists for a user interface associated with a single controller which is capable of providing information, functionality, and/or status updates relating to various printing technologies. Thus, at least one object of the example embodiments presented herein may be to provide a dynamic and adaptable user interface capable of providing printing information for various types of printing technologies.

First aspect of the invention is a method for providing a dynamic user interface as defined in claim 1. Second aspect of the invention is a printing display unit as defined in claim 6.

Third aspect of the invention is a computer readable storage medium encoded with computer executable instructions, wherein the instructions, when executed by a printing display unit, may perform any of the method steps described in claims 1-5.

Additional aspects of the invention are defined in claims 2-5, 7-13.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 is a schematic view of a dynamic user interface template, according to some of the example embodiments;
FIG. 2 is a schematic representation of a printing display unit, according to some of the example embodiments;
FIGS. 3A and 3B are schematic views of example multiple print-head connection ports, according to some of the example embodiments;
FIG. 4 is a flow diagram depicting example operations that may be taken by the printing display unit of FIG. 2, according to some of the example embodiments; and
FIGS. 5A and 5B are illustrative examples of a dynamic user interface, according to some of the example embodiments.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments.

In order to provide a better explanation of the example embodiments, a problem will first be identified and discussed. Currently, many printing related user interfaces are static. These static interfaces are typically designed to provide printing related information and functionality for a single type of printing technology. Thus, the graphical layouts of the static interfaces remain the same and are not suitable for various forms of printing technologies.

Thus, a need exists for a user interface capable of displaying different forms of printing information in industrial printing environments. Some example embodiments presented herein are directed towards a system, and corresponding method, for a dynamic and adaptable user interface for providing print related information and/or functionality for various forms of print technologies.

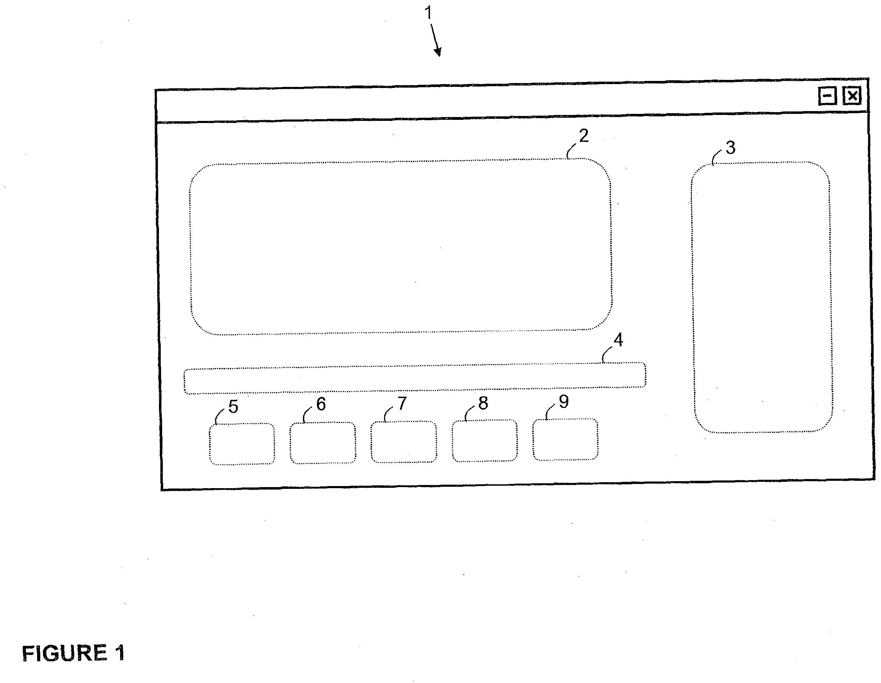

According to some of the example embodiments, portions of a user interface template may be dynamically changed depending on a print technology which is currently in use. **Figure 1** illustrates an example of a dynamic user interface template 1. The portions of the dynamic user interface template highlighted by dashed lines represent changeable portions of the template. These changeable portions may differ depending on the printing technology being utilized. The printing technology may be determined by a detected or provided print-head type. Once a print-head has been connected to the controller, the dynamic user interface template 1 may be altered depending on the print-head type.

Based on the print-head type, the type of data displayed, the graphical layout of the data, and/or the interface functionality may be changed. For example, the template 1 comprises a viewing section 2 where a printing preview or status may be displayed. Depending on the print-head type, the retrieval of the displayed information may be from different data sources. Furthermore, the type of data and how the data is displayed may also differ with different print-head types or printing technologies.

The dynamic user interface template 1 also comprises a second viewing window 3. For some print technologies the second window 3 may be used to display additional printing related information. The second window 3 may also comprise various dropdown menus providing a user a choice among a variety of operational or viewing options.

The dynamic template 1 also comprises a status bar 4 which may be used to provide additional printing information. The dynamic template 1 further comprises action buttons 5-9, with which a user may choose an action or printing option. It should be appreciated that the dynamic user interface template of Figure 1 is presented merely as an example and a dynamic user interface template according to the example embodiments may take any form or layout.

In adapting the user interface template to the detected print-head type, any number of modules may be associated with the changeable portions of the template. Modular programming is a software design technique in which software may be composed of separate, interchangeable components, called modules. By breaking down program functions into modules, each module may accomplish any number of functions and comprise everything necessary to accomplish this.

With respect to some of the example embodiments presented herein, any number of modules may correspond to any number of changeable portions of the dynamic user interface template 1. It should further be appreciated that a module may comprise any number of sub-modules. The modules may affect, for example, the graphical layout of the user interface, the information viewed and/or provided by the user interface, the user operational options, and/or the data sources utilized by the user interface.

Some examples of functionality or information which may be supplied by a module may be supply management information, print editing functionality, printer adjustment capabilities. Furthermore, modules may also provide, for example, functionality related to the presentation of a printer status, printer state model, printer parameters, printer counters, printer control functions, date and time information, menu structure, head operations, etc. The module functionalities provided above are done so merely for the purpose of example. It should be appreciated that any number of modules may be provided to describe anything that may be displayed or provided by a user interface. It should also be appreciated that the module associations with respect to print technology may be updatable user programmable associations.

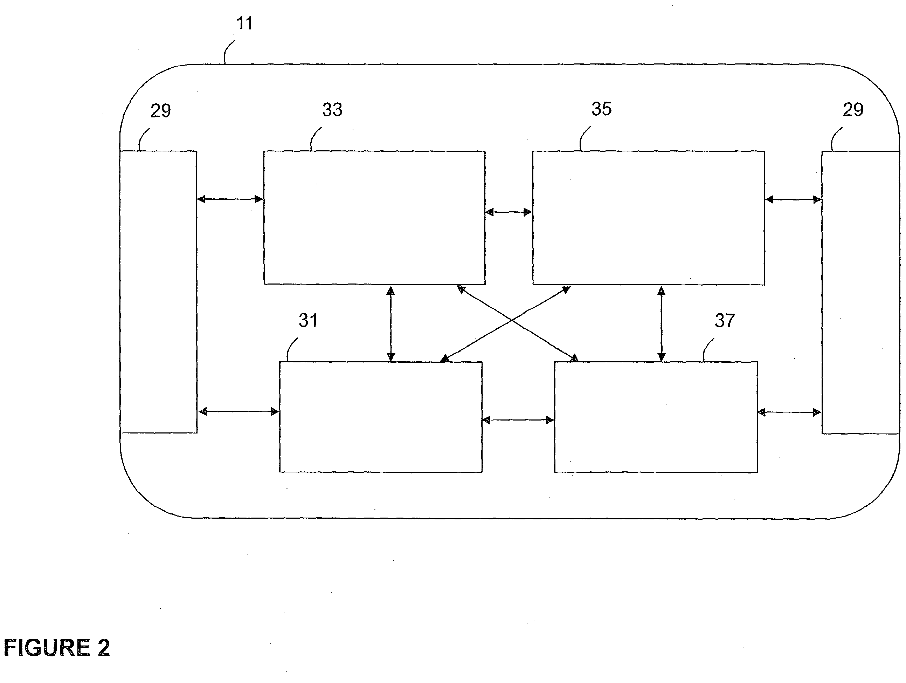

**Figure 2** illustrates a simplified example of a printing display unit 11 which may be utilized in conjunction with the dynamic interface, according to some of the example embodiments. According to some of the example embodiments, the printing display unit 11 may be located within a printing controller. It should also be appreciated that the printing display unit may be a stand-alone unit or located anywhere else within an industrial printing system.

The printing display unit 11 of Figure 2 comprises two communication ports 29, however it should be appreciated that the unit may comprise any number of communication ports 29 that may be able to transmit or receive any number or type of signals, data, and/or instructions. It should be appreciated that the printing display unit 11 may alternatively comprise a single transceiver port. It should further be appreciated that the communication ports 29 or transceiver port may be in the form of any input/output communications port known in the art.

The printing display unit 11 also comprises at least one memory unit 31. The memory unit 31 may be configured to store received, transmitted, and/or measured data and/or executable program instructions. The memory unit 31 may be any suitable type of computer readable memory and may be of volatile and/or non-volatile type.

The printing display unit 11 also comprises a print-head manager 37 that is configured to detect communication with a connected print-head. Print-heads from printers of various printing technologies may be connected to the printing display unit 11 via a connection port.

The printing display unit 11 further comprises a general processing unit 33. The printing display unit 11 also comprises a module unit 35. The module unit 35 is configured to retrieve associated modules and alter changeable portions of a user interface template based on a print-head type.

It should be appreciated that the general processing unit 33, module unit 35 and the print-head manager 37 need not be comprised as separate units. These units may be comprised as a single unit or any number of units. Furthermore, the general processing unit 33, module unit 35 and the print-head manager 37 may be any suitable type of computation unit, e.g. a microprocessor, digital signal processor (DSP), field programmable gate array (FPGA), or application specific integrated circuit (ASIC).

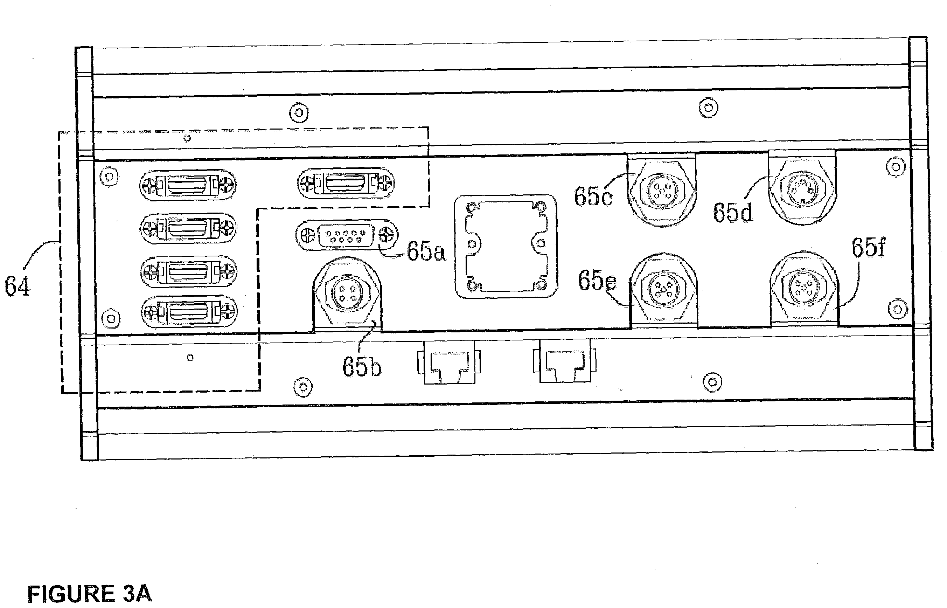

**Figure 3A** illustrates an example of a print-head connection port. The print-head connection port may feature any number of print-head connections. Any number of the print-head connections may be of a same type or shape, as illustrated by the print-head connection group 64. It should be appreciated that the print-head connectors of group 64 may be dedicated print-head connectors, which may be configured to connect with a print-head of a specific type. Thus, detection of the print-head type may be performed by determining which print-head connector is connected to a print-head.

Alternatively, the print-head connectors of group 64 may be configured to connect to any type of print-head, despite being of a same shape or type. Such print-head connectors may be referred to as universal print-head connectors. In such a configuration, print-head detection may be determined, for example, by information supplied by the print-head and/or by voltage analysis, which will be described in greater detail below. Figure 3A further provides examples of print-head connectors 65a-65f of different types and shapes. It should be appreciated that any number of the print-head connectors 65a-65f may be dedicated or universal type print-head connectors. It should further be appreciated that the connection port of Figure 3A comprises a number of dimensions. Such dimensions are supplied solely for example purposes and are nonlimiting.

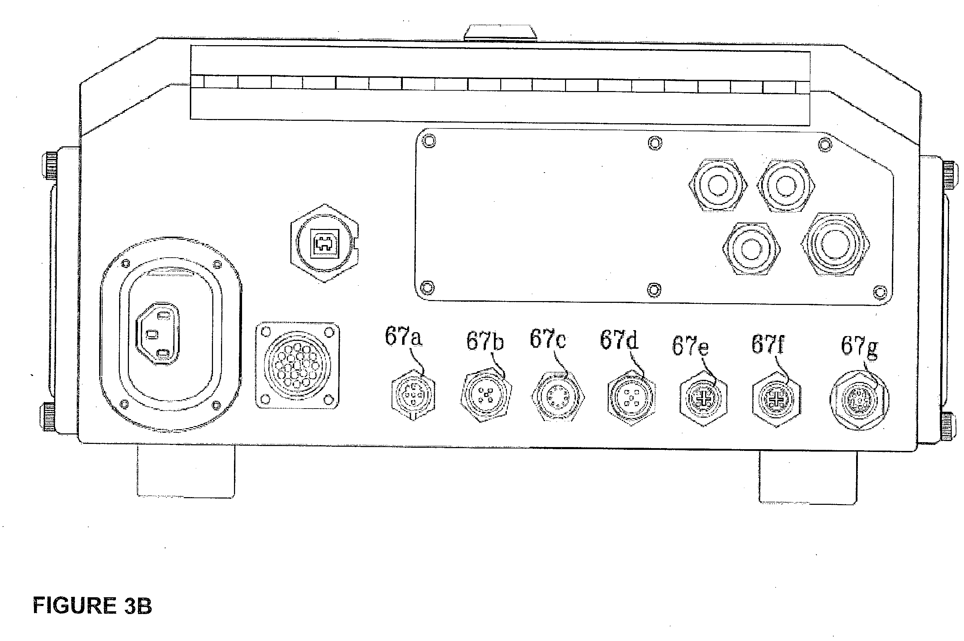

**Figure 3B** provides an additional example of a print-head connection port. Any number of the print-head connectors 67a-67g may be dedicated or universal print-head connectors. It should be appreciated that the connection ports of Figures 3A and 3B are provided merely as examples. The connection ports may comprise any number of connectors suitable for connecting to any number of print-heads of different technologies, and may be of any dimension, shape or type.

Some of the various print technologies which may be used in conjunction with the printing unit 11 and the connection ports may be, but are not limited to; vector, raster, and/or Radio Frequency Identification (RFID) type print technologies. Specifically, these technology types may comprise laser, thermal transfer, direct thermal transfer, valve jet, continuous ink jet, bubble jet, and/or piezoelectric type printers. It should be appreciated that the example embodiments presented herein may be applied to any type of printing technology. It should also be appreciated that the identification of a printing technology may be referred to herein as a print-head type.

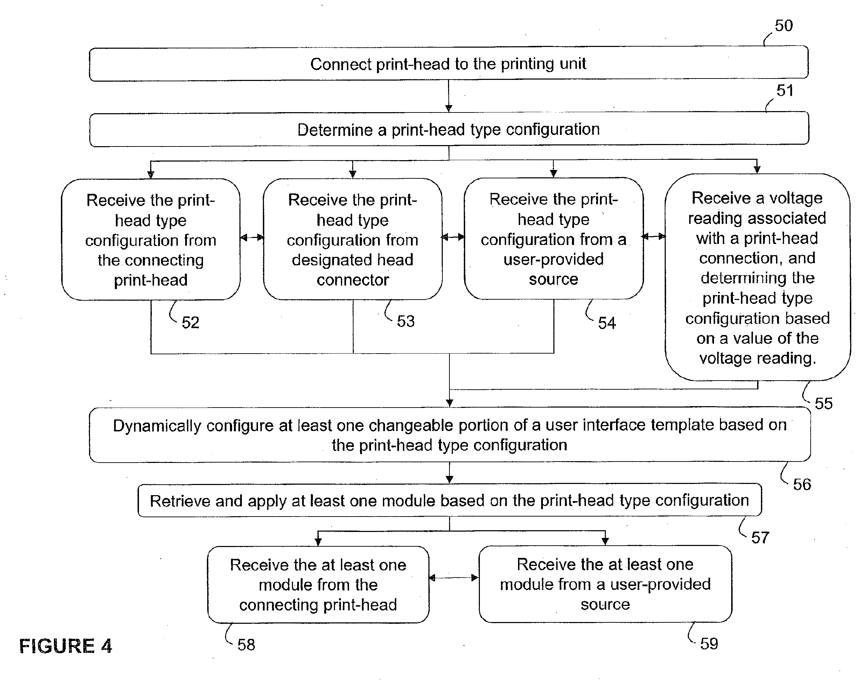

**Figure 4** illustrates a flow diagram depicting example operations which may be taken by a printing display unit 11, according to some of the example embodiments. In operation, a print-head is connected to the printing display unit 11 (50). Once a connection has been detected, a print-head manager 37 is utilized in determining a print-head type (51).

In some example embodiments, the print-head type may be determined by receiving the print-head type from the connection print-head (52). For example, the print-head connector may comprise a readable memory where instructions and identification information may be stored. Thus, upon connection, the print-head connector may transmit print-head identification information through, for example, the communication ports 29.

In some example embodiments, the print-head type may be determined by receiving the print-head type from a designated head connector (53). As previously discussed, at least a subset of the various connection ports of the printing display unit 11 may be designated ports. Thus, according to some example embodiments, a designated port may only be configurable to be connected to the print-head type associated with the designation. Therefore, upon detecting a connection to a designated port, the print-head manager 37 may determine the print-head type of the connecting print-head.

In some example embodiments, the print-head type may be determined by receiving the print-head type from a user-provided source (54). For example, a user may provide the print-head type via a user interface. In other example embodiments, the user may provide the print-head type by uploading such information via a computer readable medium or a network server.

In some example embodiments, the print-head type may be determined by receiving a voltage reading associated with a print-head connection. The print-head type may thereafter be determined based on a value of the voltage reading (55). Different types of print technologies may require different amounts of power or voltage. Thus, by measuring the voltage associated with a connection print-head, the determination of the print-head type may be made. It should be appreciated that the print-head manager 37 may retrieve a comparison voltage reading for the memory unit 31 or any other unit or database featuring stored information. It should further be appreciated that a user may program or enter respective voltage values for various print technologies in the printing display unit 11. It should be appreciated that the methods for print-head type retrieval provided above are merely examples. Any other forms of print-head type retrieval known in the art may also be utilized. It should further be appreciated that multiple forms of print-head retrieval may be utilized at the same time to, for example, provide a check that the correct print-head type has been determined.

Once a determination of the print-head type has been made; at least one changeable portion of the user interface template is dynamically configured based on the print-head type (56). The dynamic configuration may be performed by the processing unit 33 and/or the module unit 35. The dynamic configuration may comprise retrieving and applying at least one module based on the print-head type (57).

The retrieval may comprise receiving the at least one module from the connecting print-head (58). As discussed above, the print-head connector may comprise a readable memory where any number of modules may be stored. Thus, upon connection, the print-head connector may transmit the at least one module through, for example, the communication ports 29. Modules retrieved from the connecting print-head may comprise any form of data or user interface operations. For example, the connecting print-head may provide supply management information.

The retrieval may also comprise receiving the at least one module from a user-provided source (59). The user-provided source may be in the form of an input provided by the user through the interface, information provided by a server, a user provided database entry, or any other user provided information source known in the art. The retrieval may also comprise retrieving the at least one module from a database. The database may be a print technology specific database such that modules associated with a particular print technology may be stored in an associated database. It should be appreciated that multiple methods, or data sources, for retrieval may be employed simultaneously for different portions of the same dynamic user interface.

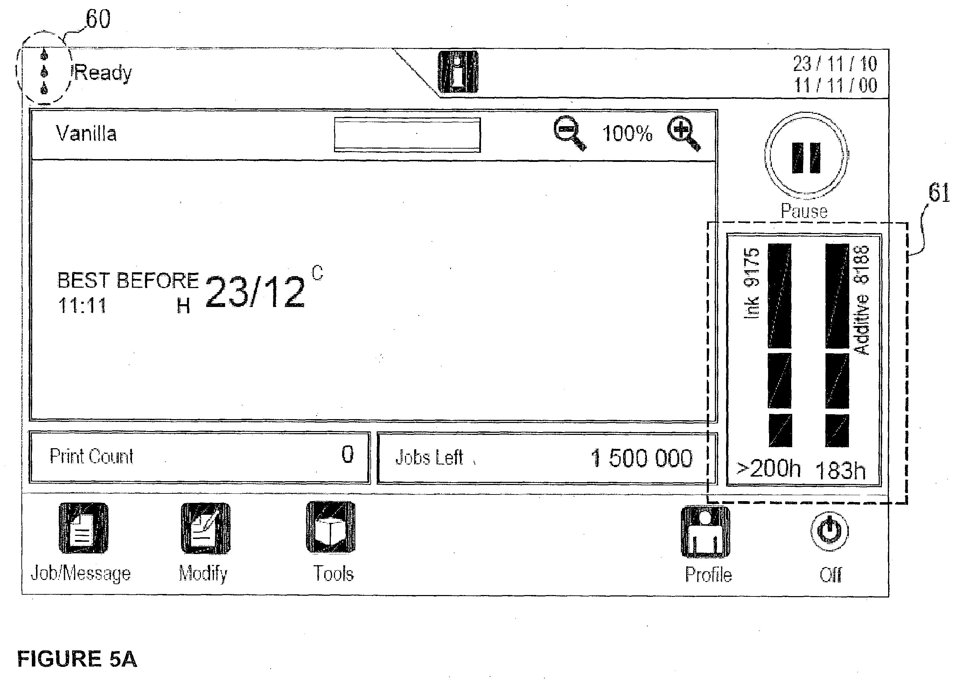

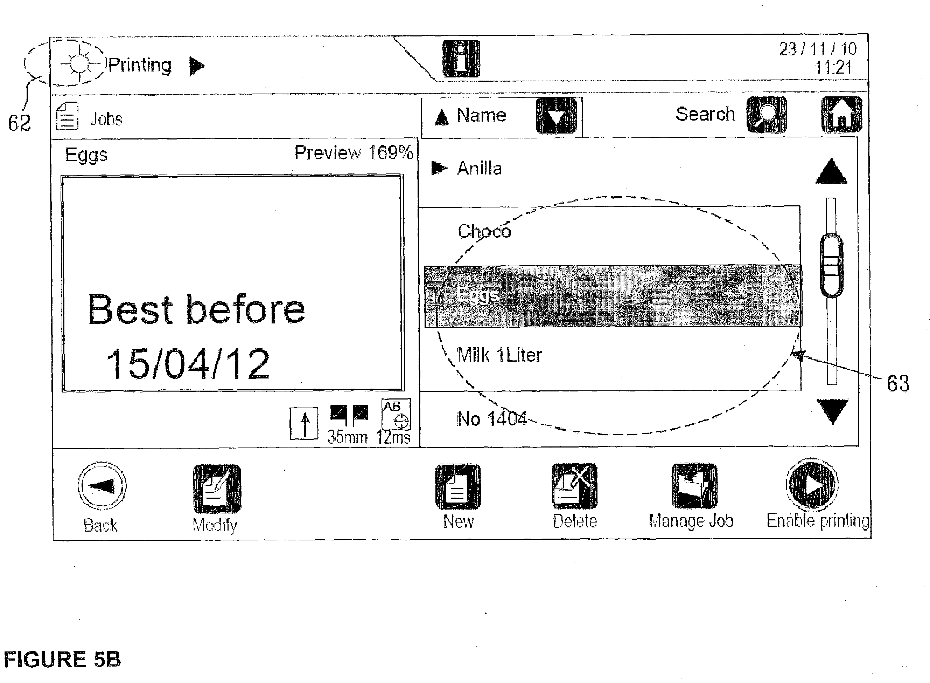

Figures 5A and 5B illustrate example dynamic user interfaces which have been dynamically reconfigured, according to some of the example embodiments. In the example provided by **Figure 5A** the detected print-head type is an ink jet print technology. Thus, the dynamic user interface may comprise, for example, a print-type identifier 60 informing the user of the print technology associated with the current user interface. The dynamic user interface may also comprise a status window 61 which may provide current ink levels associated with the ink jet print-head.

In the example provided by **Figure 5B****,** the detected print-head type may be a laser print technology. The dynamic user interface of Figure 5B may comprise, for example, a print-type identifier 62 informing the user of the print technology associated with the current user interface. The user interface of Figure 5B may also comprise a dropdown menu 63 associated with the current print technology.

It should be appreciated that according to some example embodiments, the display of the printing unit 11 may be configured to simultaneously display multiple dynamic user interfaces, wherein the multiple dynamic user interfaces may be associated with different print technologies or different print-heads. The multiple dynamic user interfaces may be displayed in a cascade or tiled manner.

It should also be appreciated that a single module may comprise any number of sub-modules. Furthermore, it should be appreciated that a module may provide the generation of any number of additional user interfaces. For example, a module may provide any number of sub-menus which may appear in the form of pop-up windows.

The above mentioned and described embodiments are only given as examples and should not be limiting to the present invention.

Modifications and other embodiments of the disclosed invention(s) will come to mind to one skilled in the art having the benefit of the teachings present in the foregoing descriptions and the associated drawings. Although specific terms may be employed herein, they are used in a generic and descriptive sense only and not for purpose of limitation.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may comprise removable and non-removable storage devices including, but not limited to, Read Only Memory (ROM), Random Access Memory (RAM), compact discs (CDs), digital versatile discs (DVD), flash memory, EEPROM, etc. Generally, program modules may comprise routines, programs, objects, components, data structures, etc. that performs particular tasks or implement particular abstract data types. Computer-executable instructions, associated data structures, and program modules represent examples of program code for executing steps of the methods disclosed herein. Such instructions may be executed by the processing unit, e.g., central processing unit, microcontroller, microprocessor, field programmable gate array, application specific integrated circuit, digital signal processor, etc. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A method of providing a dynamic and adaptable user interface for displaying print related information and/or functionality for various types of print technologies on a display unit (11) of an industrial printer system, the display unit (11) comprising a processing unit (33) and a module unit (35), the method comprising:
detecting and determining (51) a utilized printing technology based on a print-head type;
depending on the print-head type:
retrieving data to be displayed from different data sources; and
receiving (58) by said module unit at least one module from a connecting print-head;
associating the at least one module with changeable portions of a template for adapting the user interface template to the detected print-head type and a detected utilized printing technology; the module being configured to affect one or more of graphical layout of the user interface, information viewed and provided by the user interface, user operational options, data sources utilized by the user interface, and alter changeable portions of the user interface template based on the print-head type and on the retrieved data; and
dynamically configuring (56) by said module and/or the processing unit (33) at least one changeable portion of a user interface template based on the print-head type and utilized printing technology, wherein the at least one changeable portion is related to display of a printing preview or a printing status.

2. The method of claim 1, wherein the detecting and determining a utilized printing technology further comprises one or several of:
- receiving a print-head identification from a connecting print-head;
- receiving a print-head identification from a designated head connector;
- receiving a voltage reading associated with a print-head connection, and determining the print-head type based on a value of the voltage reading;
- receiving a user-provided identification information.

3. The method of any of claims 1 or 2, wherein the dynamically configuring further comprises retrieving at least one module based on the print-head type and applying the at least one module to the at least one changeable portion of the user interface template.

4. The method of claim 3, wherein the retrieving further comprises retrieving the at least one module, wherein the at least one module provides one or several of:
- a layout of graphical components and/or functionality of the at least one changeable portion of the user interface template;
- at least one of data source, user operational, and/or user interface management functionality.

5. The method of any of claims 3-4, wherein the retrieving further comprises one or several of:
- retrieving the at least one module, wherein the at least one module comprises at least one sub-module;
- retrieving the at least one module from a database based on the print-head type;
- retrieving the at least one module from a connecting print-head;
- retrieving the at least one module from a user provided source.

6. A printing display unit (11) in an industrial printer system configured for displaying an adaptable user interface for providing print related information and/or functionality for various types of print technologies, the printing display unit being configured to display a user interface template comprising at least one changeable portion, the printing display unit comprising:
a processing unit (33);
a print-head manager (37) configured to detect communication with a connected print-head type;
a module unit (35) configured to affect one or more of graphical layout of the user interface, information viewed, provided by the user interface, user operational options, data sources utilized by the user interface based on the connected print-head type and based on a retrieved data;
**characterised by**:
a print-head manager (37) adapted to determine the connected print-head type and utilized printing technology;
depending on the connected print-head type the processing unit (33) being configured to:
retrieve data to be displayed from different data sources; and
receive (58) to said module unit at least one module from the connected print-head type;
the module unit (35) and/or the processing unit (33) being further adapted to dynamically configure the at least one changeable portion of the user interface template on the printer display unit (11) based on the connected print-head type and the utilized printing technology, wherein the at least one changeable portion is related to display of a printing preview or a printing status.

7. The printing display unit (11) of claim 6, further comprising a communication port (29) configured to receive one or several of:
- a print-head identification from a connecting print-head, and the print-head manager is adapted to determine the print-head type based on the received print-head identification;
- a print-head identification from a designated head connector, and the print-head manager is adapted to determine the print-head type based on the received print-head identification;
- a voltage reading associated with a print-head connection, and the print-head manager is adapted to determine the print-head type based on a value of the voltage reading;
- a user-provided identification information, and the print-head manager is adapted to determine the print-head type based on the received user-provided identification.

8. The printing display unit (11) of any of claims 6 or 7, wherein the module unit is further configured to retrieve at least one module based on the print-head type and to apply the at least one module to the at least one changeable portion of the user interface template.

9. The printing display unit (11) of claim 8, wherein the at least one module provides a layout of graphical components and/or functionality of the at least one changeable portion of the user interface template.

10. The printing display unit (11) of claim 8, wherein the at least one module provides at least one of data source, user operational, and/or user interface management functionality.

11. The printing display unit (11) of any of claims 8-10, wherein the at least one module comprises at least one sub-module.

12. The printing display unit (11) of any of claims 8-11, wherein the module unit is further configured to retrieve one or several of:
- the at least one module from a database based on the print-head type;
- the at least one module from a connecting print-head;
- the at least one module from a user-provided source.

13. An industrial printing system comprising the printing display unit of any of claims 6-12.

14. A computer readable storage medium encoded with computer executable instructions, which when executed by a printing display unit, cause the printing display unit to carry out the method of any of claims 1-5.

## Patentansprüche

1. Verfahren zur Bereitstellung einer dynamischen und adaptierbaren Benutzerschnittstelle zum Anzeigen druckbezogener Informationen und/oder der Funktionalität für verschiedene Arten von Drucktechnologien auf einer Anzeigeeinheit (11) eines industriellen Druckersystems, wobei die Anzeigeeinheit (11) eine Verarbeitungseinheit (33) und eine Moduleinheit (35) umfasst, wobei das Verfahren umfasst:
Erkennen und Bestimmen (51) einer verwendeten Drucktechnologie auf der Grundlage eines Druckkopftyps;
in Abhängigkeit vom Druckkopftyp:
Abrufen von Daten, die aus verschiedenen Datenquellen angezeigt werden sollen; und
Empfangen (58) durch die Moduleinheit mindestens eines Moduls von einem angeschlossenen Druckkopf;
Assoziieren des mindestens einen Moduls mit veränderbaren Abschnitten einer Vorlage zur Anpassung der Benutzerschnittstellenvorlage an den erkannten Druckkopftyp und einer erkannten verwendeten Drucktechnologie; wobei das Modul so konfiguriert ist, dass es sich auf ein oder mehrere von grafischem Layout der Benutzeroberfläche, der von der Benutzeroberfläche angezeigten und bereitgestellten Informationen, der Benutzer-Betriebsoptionen, der Datenquellen, die von der Benutzeroberfläche verwendet werden, auswirkt und veränderbare Abschnitte der Benutzerschnittstellenvorlage auf der Grundlage des Druckkopftyps und der abgerufenen Daten ändert; und
dynamisches Konfigurieren (56) durch das Modul und/oder die Verarbeitungseinheit (33) mindestens eines veränderbaren Abschnitts einer Benutzerschnittstellenvorlage auf der Grundlage des Druckkopftyps und der verwendeten Drucktechnologie, wobei sich der mindestens eine veränderbare Abschnitt auf das Anzeigen einer Druckvorschau oder eines Druckstatus bezieht.

2. Verfahren nach Anspruch 1, wobei das Erkennen und Bestimmen einer verwendeten Drucktechnologie weiter eines oder mehrere aus Folgendem umfasst:
- Empfangen einer Druckkopfidentifizierung von einem angeschlossenen Druckkopf;
- Empfangen einer Druckkopfidentifizierung von einem vorgesehenen Kopfanschluss;
- Empfangen eines Spannungswertes, der mit einem Druckkopfanschluss assoziiert ist, und
- Bestimmen des Druckkopftyps auf der Grundlage eines Wertes der Spannungsablesung;
- Empfangen einer vom Benutzer bereitgestellten Identifizierungsinformation.

3. Verfahren nach einem der Ansprüche 1 oder 2, wobei das dynamische Konfigurieren weiter das Abrufen mindestens eines Moduls auf der Grundlage des Druckkopftyps und das Anwenden des mindestens einen Moduls auf den mindestens einen veränderbaren Abschnitt der Benutzerschnittstellenvorlage umfasst.

4. Verfahren nach Anspruch 3, wobei das Abrufen weiter das Abrufen des mindestens einen Moduls umfasst, wobei das mindestens eine Modul eines oder mehrere aus Folgendem bereitstellt:
- ein Layout der grafischen Komponenten und/oder Funktionalität des mindestens einen veränderbaren Abschnitts der Benutzerschnittstellenvorlage;
- mindestens eine der Funktionalitäten der Datenquelle, des Benutzerbetriebs und/oder der Benutzerschnittstellenverwaltung.

5. Verfahren nach einem der Ansprüche 3-4, wobei das Abrufen weiter eines oder mehrere aus Folgendem umfasst:
- Abrufen des mindestens einen Moduls, wobei das mindestens eine Modul mindestens ein Untermodul umfasst;
- Abrufen des mindestens einen Moduls aus einer Datenbank auf der Grundlage des Druckkopftyps;
- Abrufen des mindestens einen Moduls von einem angeschlossenen Druckkopf;
- Abrufen des mindestens einen Moduls von einer vom Benutzer bereitgestellten Quelle.

6. Druckanzeigeeinheit (11) in einem industriellen Druckersystem, die zum Anzeigen einer adaptierbaren Benutzerschnittstelle zum Bereitstellen druckbezogener Informationen und/oder Funktionalität für verschiedene Arten von Drucktechnologien konfiguriert ist, wobei die Druckanzeigeeinheit zum Anzeigen einer Benutzerschnittstellenvorlage konfiguriert ist, die mindestens einen veränderbaren Abschnitt umfasst, wobei die Druckanzeigeeinheit umfasst:
eine Verarbeitungseinheit (33);
einen Druckkopfverwalter (37), der so konfiguriert ist, dass er die Kommunikation mit einem angeschlossenen Druckkopftyp erkennt;
eine Moduleinheit (35), die so konfiguriert ist, dass sie sich auf ein oder mehrere von grafischem Layout der Benutzerschnittstelle, der angezeigten Informationen, der von der Benutzerschnittstelle bereitgestellten Informationen, der Benutzer-Betriebsoptionen, der Datenquellen, die von der Benutzerschnittstelle verwendet werden, auf der Grundlage des angeschlossenen Druckkopftyps und auf der Grundlage der abgerufenen Daten auswirkt;
**gekennzeichnet durch**:
einen Druckkopfverwalter (37), der angepasst ist, um den angeschlossenen Druckkopftyp und die verwendete Drucktechnologie zu bestimmen;
wobei in Abhängigkeit vom angeschlossenen Druckkopftyp die Verarbeitungseinheit (33) konfiguriert ist zum:
Abrufen der anzuzeigenden Daten aus verschiedenen Datenquellen; und
Empfangen (58) zu der genannten Moduleinheit mindestens eines Moduls von dem angeschlossenen Druckkopftyp;
wobei die Moduleinheit (35) und/oder die Verarbeitungseinheit (33) weiter angepasst ist, um den mindestens einen veränderbaren Abschnitt der Benutzerschnittstellenvorlage auf der Druckeranzeigeeinheit (11) auf der Grundlage des angeschlossenen Druckkopftyps und der verwendeten Drucktechnologie dynamisch zu konfigurieren, wobei der mindestens eine veränderbare Abschnitt sich auf die Anzeige einer Druckvorschau oder eines Druckstatus bezieht.

7. Druckanzeigeeinheit (11) nach Anspruch 6, die weiter einen Kommunikationsanschluss (29) umfasst, der so konfiguriert ist, dass er eines oder mehrere aus Folgendem empfängt:
- eine Druckkopfidentifizierung von einem angeschlossenen Druckkopf, und der Druckkopfverwalter wird so angepasst, dass er den Druckkopftyp auf der Grundlage der erhaltenen Druckkopfidentifizierung bestimmt;
- eine Druckkopfidentifizierung von einem vorgesehenen Kopfanschluss, und der Druckkopfverwalter ist so angepasst, dass er den Druckkopftyp auf der Grundlage der erhaltenen Druckkopfidentifizierung bestimmt;
- eine mit einem Druckkopfanschluss assoziierte Spannungsanzeige, und der Druckkopfverwalter ist so angepasst, dass er den Druckkopftyp auf der Grundlage eines Wertes der Spannungsanzeige bestimmt;
- eine vom Benutzer bereitgestellte Identifizierungsinformation, und der Druckkopfverwalter ist so angepasst, dass er den Druckkopftyp auf der Grundlage der erhaltenen vom Benutzer bereitgestellten Identifizierung bestimmt.

8. Druckanzeigeeinheit (11) nach einem der Ansprüche 6 oder 7, wobei die Moduleinheit weiter so konfiguriert ist, dass sie mindestens ein Modul auf der Grundlage des Druckkopftyps abruft und das mindestens eine Modul auf den mindestens einen veränderbaren Abschnitt der Benutzerschnittstellenvorlage anwendet.

9. Druckanzeigeeinheit (11) nach Anspruch 8, wobei das mindestens eine Modul ein Layout von grafischen Komponenten und/oder die Funktionalität des mindestens einen veränderbaren Abschnitts der Benutzerschnittstellenvorlage bereitstellt.

10. Druckanzeigeeinheit (11) nach Anspruch 8, wobei das mindestens eine Modul mindestens eine der Funktionalitäten der Datenquelle, des Benutzerbetriebs und/oder der Benutzerschnittstellenverwaltung bereitstellt.

11. Druckanzeigeeinheit (11) nach einem der Ansprüche 8-10, wobei das mindestens eine Modul mindestens ein Untermodul umfasst.

12. Druckanzeigeeinheit (11) eines der Ansprüche 8-11, wobei die Moduleinheit weiter so konfiguriert ist, dass sie eines oder mehrere aus Folgendem abruft:
- das mindestens eine Modul aus einer Datenbank auf der Grundlage des Druckkopftyps;
- das mindestens eine Modul von einem angeschlossenen Druckkopf;
- das mindestens eine Modul aus einer vom Benutzer bereitgestellten Quelle.

13. Industrielles Drucksystem, das die Druckanzeigeeinheit nach einem der Ansprüche 6-12 umfasst.

14. Computerlesbares Speichermedium, das mit computerausführbaren Anweisungen kodiert ist, die, wenn sie von einer Druckanzeigeeinheit ausgeführt werden, die Druckanzeigeeinheit veranlassen, das Verfahren nach einem der Ansprüche 1-5 auszuführen.

## Revendications

1. Procédé de fourniture d'une interface utilisateur dynamique et adaptable pour afficher des informations et/ou une fonctionnalité associées à une impression pour divers types de technologie d'impression sur une unité d'affichage (11) d'un système d'imprimante industrielle, l'unité d'affichage (11) comprenant une unité de traitement (33) et une unité de module (35), le procédé comprenant :
la détection et la détermination (51) d'une technologie d'impression utilisée sur la base d'un type de tête d'impression ;
en fonction du type de tête d'impression :
la récupération de données affichées à partir de différentes sources de données ; et
la réception (58) par ladite unité de module d'au moins un module à partir d'une tête d'impression de connexion ;
l'association du au moins un module avec des parties modifiables d'un modèle pour adapter le modèle d'interface utilisateur au type de tête d'impression détectée et à une technologie d'impression utilisée détectée ; le module étant configuré pour affecter un ou plusieurs parmi la mise en page graphique de l'interface utilisateur, les informations visualisées et fournies par l'interface utilisateur, les options opérationnelles de l'utilisateur, les sources de données utilisées par l'interface utilisateur, et modifier les parties modifiables du modèle d'interface utilisateur sur la base du type de tête d'impression et des données récupérées ; et
la configuration dynamique (56) par ledit module et/ou l'unité de traitement (33) d'au moins une partie modifiable d'un modèle d'interface utilisateur sur la base du type de tête d'impression et de la technologie d'impression utilisée, dans lequel la au moins une partie modifiable se rapporte à un affichage d'un aperçu d'impression ou d'un état d'impression.

2. Procédé selon la revendication 1, dans lequel la détection et la détermination d'une technologie d'impression utilisée comprend en outre un ou plusieurs parmi :
- la réception d'une identification de tête d'impression à partir d'une tête d'impression de connexion ;
- la réception d'une identification de tête d'impression à partir d'un connecteur de tête désigné ;
- la réception d'une lecture de tension associée à une connexion de tête d'impression, et la détermination du type de tête d'impression sur la base d'une valeur de la lecture de tension ;
- la réception d'informations d'identification fournies par l'utilisateur.

3. Procédé selon l'une quelconque des revendications 1 ou 2, dans lequel la configuration dynamique comprend en outre la récupération d'au moins un module sur la base du type de tête d'impression et l'application du au moins un module à la au moins une partie modifiable du modèle d'interface utilisateur.

4. Procédé selon la revendication 3, dans lequel la récupération comprend en outre la récupération du au moins un module, dans lequel le au moins un module fournit un ou plusieurs parmi :
- une mise en page de composants graphiques et/ou d'une fonctionnalités de la au moins une partie modifiable du modèle d'interface utilisateur ;
- au moins l'un parmi une fonctionnalité de gestion de source de données, d'opération utilisateur et/ou d'interface utilisateur.

5. Procédé selon l'une quelconque des revendications 3 et 4, dans lequel la récupération comprend en outre un ou plusieurs parmi :
- la récupération du au moins un module, dans lequel le au moins un module comprend au moins un sous-module ;
- la récupération du au moins un module à partir d'une base de données sur la base du type de tête d'impression ;
- la récupération du au moins un module à partir d'une tête d'impression de connexion ;
- la récupération du au moins un module à partir d'une source fournie par l'utilisateur.

6. Unité d'affichage d'impression (11) dans un système d'imprimante industrielle configurée pour afficher une interface utilisateur adaptable pour fournir des informations et/ou une fonctionnalité associées à une impression pour divers types de technologies d'impression, l'unité d'affichage d'impression étant configurée pour afficher un modèle d'interface utilisateur comprenant au moins une partie modifiable, l'unité d'affichage d'impression comprenant :
une unité de traitement (33) ;
un gestionnaire de tête d'impression (37) configuré pour détecter une communication avec un type de tête d'impression connectée ;
une unité de module (35) configurée pour affecter un ou plusieurs parmi la mise en page graphique de l'interface utilisateur, les informations visualisées, fournies par l'interface utilisateur, les options opérationnelles de l'utilisateur, les sources de données utilisées par l'interface utilisateur sur la base du type de tête d'impression connectée et sur la base de données récupérées ;
**caractérisée par** :
un gestionnaire de tête d'impression (37) adapté pour déterminer le type de tête d'impression connectée et la technologie d'impression utilisée ;
en fonction du type de tête d'impression connectée, l'unité de traitement (33) est configurée pour :
récupérer des données à afficher à partir de différentes sources de données ; et
recevoir (58) par ladite unité de module au moins un module à partir du type de tête d'impression connectée ;
l'unité de module (35) et/ou l'unité de traitement (33) étant adaptées en outre pour configurer de manière dynamique la au moins une partie modifiable du modèle d'interface utilisateur sur l'unité d'affichage d'imprimante (11) sur la base du type de tête d'impression connectée et de la technologie d'impression utilisée, dans laquelle la au moins une partie modifiable se rapporte à un affichage d'un aperçu d'impression ou d'un état d'impression.

7. Unité d'affichage d'impression (11) selon la revendication 6, comprenant en outre un port de communication (29) configuré pour recevoir un ou plusieurs parmi :
- une identification de tête d'impression à partir d'une tête d'impression de connexion, et le gestionnaire de tête d'impression est adapté pour déterminer le type de tête d'impression sur la base de l'identification de tête d'impression reçue ;
- une identification de tête d'impression à partir d'un connecteur de tête désigné, et le gestionnaire de tête d'impression est adapté pour déterminer le type de tête d'impression sur la base de l'identification de tête d'impression reçue ;
- une lecture de tension associée à une connexion de tête d'impression, et le gestionnaire de tête d'impression est adapté pour déterminer le type de tête d'impression sur la base d'une valeur de la lecture de tension ;
- des informations d'identification fournies par l'utilisateur, et le gestionnaire de tête d'impression est adapté pour déterminer le type de tête d'impression sur la base de l'identification fournie par l'utilisateur reçue.

8. Unité d'affichage d'impression (11) selon l'une quelconque des revendications 6 ou 7, dans laquelle l'unité de module est configurée en outre pour récupérer au moins un module sur la base du type de tête d'impression et pour appliquer le au moins un module à la au moins une partie modifiable du modèle d'interface utilisateur.

9. Unité d'affichage d'impression (11) selon la revendication 8, dans laquelle le au moins un module fournit une mise en page de composants graphiques et/ou d'une fonctionnalité de la au moins une partie modifiable du modèle d'interface utilisateur.

10. Unité d'affichage d'impression (11) selon la revendication 8, dans laquelle le au moins un module fournit au moins l'un parmi une fonctionnalité de gestion de source de données, d'opération utilisateur et/ou d'interface utilisateur.

11. Unité d'affichage d'impression (11) selon l'une quelconque des revendications 8 à 10, dans laquelle le au moins un module comprend au moins un sous-module.

12. Unité d'affichage d'impression (11) selon l'une quelconque des revendications 8 à 11, dans laquelle l'unité de module est configurée en outre pour récupérer un ou plusieurs parmi :
- le au moins un module à partir d'une base de données sur la base du type de tête d'impression ;
- le au moins un module à partir d'une tête d'impression de connexion ;
- le au moins un module à partir d'une source fournie par l'utilisateur.

13. Système d'impression industrielle comprenant l'unité d'affichage d'impression selon l'une quelconque des revendications 6 à 12.

14. Support de stockage lisible par ordinateur codé avec des instructions exécutables par ordinateur qui, quand elles sont exécutées par une unité d'affichage d'impression, amènent l'unité d'affichage d'impression à mettre en œuvre le procédé selon l'une quelconque des revendications 1 à 5.
